# EUROPEAN PATENT SPECIFICATION

(11) **EP 3 170 935 B1**
(45) Date of publication and mention of the grant of the patent: **06.04.2022**
(21) Application number: 16202584.5
(22) Date of filing: 30.10.2012
(51) Int. Cl.: D06F 39/04, A47L 15/42, A47L 15/00, D06F 103/50, D06F 39/08, D06F 105/26, D06F 39/00, D06F 58/20

(54) **WASHING MACHINE**
WASCHMASCHINE
MACHINE À LAVER

(43) Date of publication of application: 24.05.2017
(62) Divisional of application: 12190644.0
(73) Proprietor: Electrolux Home Products Corporation N.V., 1130 Brussels (BE)
(72) Inventor: CAVARRETTA, Francesco, 33080 Porcia (IT); VIGNOCCHI, Massimiliano, 33080 Porcia (IT)
(74) Representative: Electrolux Group Patents

(56) References cited:
- EP-A1- 2 096 203
- EP-A1- 2 224 049
- EP-A1- 2 385 169
- WO-A1-2009/123458
- WO-A1-2011/080045
- DE-A1-102004 023 126

## Description

The present invention relates to a washing machine for washing goods as, for example, a dish washing machine or a laundry washing machine.

In the present application the washing machine can be a washing machine or a washing-drying machine (i.e. a washing machine which can both wash and dry the goods).

In a washing machine, it is known to use an electric heater to heat water in a washing chamber.

In order to save energy consumption, it is also known to use a heat pump in place of or besides the electric heater for heating the water.

EP 2 096 203 A1 discloses a household washing machine comprising a tub, a heater and a container. The container contains waste water (i.e. used process water) of a previous process phase (e.g., washing or rinsing phase). The household washing machine also comprises a heat pump comprising an evaporator thermally coupled to the container, a condenser, a compressor and an expansion valve. A heat pump medium is pumped from the compressor to the condenser, where liquefaction takes place accompanied by release of heat. The released heat is used to warm process water contained in the tub. From the condenser the medium passes via the expansion valve to the evaporator where the medium evaporates whilst absorbing heat from the waste water contained in the container. From the evaporator the medium runs back to the compressor. At the end of each process phase, the waste water is drained away from the tub into a waste water line via the container wherein the cooled waste water is replaced. To prevent or reduce any deposition or sedimentation of dirt from the waste water in the container, means for agitating or pumping the waste water may be provided in the container, such as a circulation pump by which water is removed at one location of the container and fed to another location again.

The washing machine of EP 2 096 203 A1 may be further provided with an evaporator disposed in the heat pump, in thermal contact with an electronics unit, the power part of which generates a relatively large amount of heat, and used for heating the process water. This evaporator can be part of the afore-mentioned evaporator or a separate evaporator, with a branch or a switching valve. It can have its own expansion valve located upstream that can be specially adapted to the evaporator in regard to flow and temperature.

The Applicant observes that the heat exchange at the further evaporator depends on the usage of the power part of the electronics unit and cannot be controlled. Moreover, by being connected in parallel with the heat pump evaporator, it is believed to have uncontrolled impacts on the performance of the heat pump evaporator.

EP 2 224 049 A1 discloses a cleaning device comprising a tub, a waste water tank for intermediate storage of waste water from the tub, a heat pump for extracting heat from the waste water tank and supplying it to process water in the tub, and a controller configured to partially freeze the waste water in the waste water tank and to melt at least part of the ice located in the waste water tank by supplying process water from the tub towards the end of a washing process.

EP 2 206 824 A2 discloses a household appliance comprising a tub, a tank filled with liquid and a heat pump for extracting heat from the liquid contained in the tank and supplying the heat to the tub. The tank is a closed tank whose content is not changed within the framework of the normal process carried out by the household appliance. EP 2 206 824 A2 states that a heat exchanger can be provided between a waste water line and the tank in order to transfer heat from the waste water into the liquid tank and that in addition to this, other types of waste heat of the appliance can also be supplied to the liquid in the tank, for example the tank can also be coupled to an electrical consumer by means of a passive heat exchanger, a ventilation device or a heat pump. In order to improve the heat exchange, means for agitating or pumping the liquid can be further be provided on the tank.

During operation of the heat pump, the liquid in the tank is cooled down with respect to a starting temperature and, optionally, at least partially iced. The cooled/iced liquid needs to be regenerated, that is warmed up again towards the starting temperature, in order to be used again for a next, optionally immediately subsequent, process cycle. In case of ice generation, it is preferable that all the ice is melted before the next process cycle is started.

The Applicant observes that in EP 2 206 824 A2, the heat exchanger between the waste water line or additional waste heat source and the tank can only be used for such purpose of regenerating the liquid in the tank, but is not effective and actually unable to heat the liquid in the tank during the main process when the heat pump is operated to heat the process water.

It is an object of the invention to provide an alternative washing machine with a heat pump.

It is a further object of the invention to provide a washing machine with a heat pump with enhanced performance.

It is another object of the invention to provide an improved washing machine with a heat pump that has improved design and construction.

The Applicant found that the above objects are achieved, in a washing machine comprising a chamber for receiving goods to be washed and a heat pump associated with a liquid tank, by providing controllable heat to the contents of the liquid tank.

In an embodiment, a liquid circulation conduit is associated to the tank, and an additional, fluid to air heat exchanger is connected into such conduit, a controllable fan being associated with said additional heat exchanger. Advantageously, the liquid circulation conduit is provided with a pump, and the pump and/or the controllable fan are operated during operation of the heat pump.

Thus, the average temperature of the liquid within tank is increased, and the storing capacity of the tank is increased and/or the percentage of solidified liquid - ice in the case of water - is reduced, thus increasing the performance of the heat pump because the latent heat during icing can be exploited without however allowing too much ice to accumulate on the evaporator.

Advantageously, the liquid circulation conduit allows the heating transfer to also continue after the end of the heat pump operation, to speed up the regeneration of the liquid within tank, in order to be available again as energy source for the heat pump in a next, optionally immediately subsequent, washing cycle.

Accordingly, the present invention relates to a washing machine comprising:
- a chamber for receiving goods to be washed,
- a tank adapted to contain a liquid,
- a heat pump comprising a first heat exchanger, a second heat exchanger, a compressor and a pressure lowering device forming a circuit comprising a heat transfer fluid, the first heat exchanger being adapted to cool said heat transfer fluid and to heat water to be used in the chamber, the second heat exchanger being adapted to heat said heat transfer fluid and to cool the liquid contained in the tank, a liquid circulation conduit being associated to the tank,
characterized in that, to supply heat to the tank during operation of the heat pump, said washing machine further comprises an additional, fluid to air heat exchanger connected into such liquid circulation conduit, such that liquid is circulated between the tank and said additional, fluid to air heat exchanger, a controllable fan associated with said additional heat exchanger and a control unit configured to control the controllable fan during operation of the heat pump.

Advantageously, the liquid circulation conduit is provided with a pump and the pump and/or the controllable fan are operated during operation of the heat pump.

In the washing machine according to the invention, the control unit is configured to control the controllable fan and/or the pump where provided for according to on one or more of the following criteria:
a) operating the controllable fan and/or the pump during the entire operation time of the heat pump,
b) switching the controllable fan and/or the pump on a certain time after the compressor is switched on,
c) switching the controllable fan and/or the pump off a certain time after the compressor is switched off,
d) operating the controllable fan and/or the pump for a predetermined time as measured by a timer,
e) operating the controllable fan and/or the pump based on the temperature of the liquid in the tank, and
f) operating the controllable fan and/or the pump based on the quantity of frozen liquid in the tank.

The controllable fan and/or the pump may also be only operated after operation of the heat pump for regenerating purposes.

In the washing machine according to the invention, the liquid tank may be a closed tank whose content is not changed within the framework of the normal process carried out by the washing machine, or may be an open tank connected to the washing chamber to receive waste water.

Advantageously, similarly to the washing machine of European patent application 12178490.4 still secret at the date of first filing of the present application, the liquid tank is an open tank directly fluidly connected to the water mains, that is by means of a conduit that bypasses the chamber, what enables to regenerate cooled/iced liquid in the tank by replacement with clean tap water also during operation of the heat pump, and not only at the end of a process cycle of the washing mashine by using waste water coming from said process cycle.

The second heat exchanger is advantageously thermally coupled to the tank.

In an embodiment, the second heat exchanger can be arranged within the tank.

In a preferred embodiment, the first heat exchanger comprises a tube arrangement adapted to deliver heat.

In a preferred embodiment, the second heat exchanger comprises a tube arrangement adapted to aborb heat.

In an embodiment, the heat transfer fluid is a refrigerant adapted to condense inside the first heat exchanger and to evaporate inside the second heat exchanger.

In this embodiment, the first heat exchanger is a condenser and the second heat exchanger is an evaporator.

In another embodiment, the heat transfer fluid can be a refrigerant that operates non-conventional cycles, as for instance carbon dioxide, that does not undergo a phase change (i.e., condensation and evaporation) in the first heat exchanger and second heat exchanger.

The heat transfer fluid is circulated through said circuit.

Suitably, said circuit is a closed recirculation circuit.

The first heat exchanger is thermally coupled to the water to be used in the chamber.

In an embodiment, the first heat exchanger is thermally coupled to the chamber. For example, the first heat exchanger can be arranged inside the chamber, preferably on the bottom of the chamber.

In another embodiment, the first heat exchanger is thermally coupled to a water circuit conducting the water into the chamber.

In an embodiment, the water circuit is a recirculation circuit adapted to drain water from the chamber and to return it back into the chamber at another location. Suitably, the recirculation circuit comprises a pump and a pipe arrangement. In this embodiment, the first heat exchanger can be thermally connected to the pump and/or the pipe arrangement. This solution enables to recirculate the water through the recirculation circuit, which is thermally coupled to the first heat exchanger, till a desired process temperature is reached.

In another embodiment, the first heat exchanger is thermally coupled to a water circuit adapted to draw water directly from the water mains, bypassing the chamber, and to deliver it into the chamber (without recirculation). In this embodiment, the tap water from water mains is heated by the first heat exchanger before entering the chamber. The first heat exchanger thus operates only on contact with tap water. Advantageously, the tank has an input fluidly connected to the water mains by means of said conduit.

Suitably, the washing machine comprises a water outlet circuit for discharging waste water (i.e. used water) from the chamber. The water outlet circuit is advantageously fluidly connected to the bottom of the chamber.

The water outlet circuit can comprise a draining pump and draining pipes, adapted for discharging waste water from the chamber after process cycles (e.g. washing, rinsing cycles). Advantageously, the tank has an output for draining away at least part of cooled liquid from the tank.

Advantageously, the output of the tank is fluidly connected to the water outlet circuit in order to drain away at least part of cooled liquid from the tank via the water outlet circuit.

According to another embodiment, the output of the tank is fluidly connected to a dedicated liquid outlet circuit (that is to a liquid outlet circuit free of fluid connection with the water outlet circuit).

According to an embodiment, the tank is thermally coupled to the water outlet circuit (e.g. to said draining pump and/or to said draining pipes). This advantageously enables to transfer heat from the waste water flowing through the water outlet circuit to the liquid contained in the tank thereby improving regeneration of the cooled/iced liquid in the tank. The thermal coupling can be achieved, for example, by means of a heat exchanger, as for example by placing the draining pipes in contact with the tank.

As said, the washing machine suitably comprises a control unit. The control unit is configured in order to control operation of the washing machine.

The control unit is advantageously configured to i.a. manage regeneration of the liquid in the tank, cooled/iced during operation of the heat pump. Suitably, the control unit is configured to manage entry of tap water from the water mains into the tank and exit of at least part of the liquid cooled by the second heat exchanger. This, with the purpose of melting any ice formation in the tank and at least partially replacing cooled liquid in the tank with tap water at a higher temperature.

In addition or in alternative, the control unit can be configured to manage cooled/iced liquid regeneration in the tank so that cooled/iced liquid regeneration is performed when the heat pump is switched off.

In a preferred embodiment, the control unit is configured to operate the heat pump so that the liquid in the tank is at least partially freezed. In this way, the latent heat of the phase transition from liquid to solid is advantageously used and the heat pump efficiency is improved.

The washing machine can be a dish washing machine or a laundry washing machine.

According to an embodiment, the washing machine can be a washing-drying machine for both washing and drying goods.

The Applicant also found that the above objects are achieved, in a washing machine comprising a chamber for receiving goods to be washed and a heat pump associated with a liquid tank, by providing heat to the contents of liquid tank during operation of the heat pump.

In a further aspect the present invention relates to a method of operating a washing machine comprising a chamber for receiving goods to be washed, a liquid tank, and a heat pump comprising a first heat exchanger, a second heat exchanger, a compressor and a pressure lowering device forming a circuit comprising a heat transfer fluid, the method comprising:
- operating the heat pump so as to cool said heat transfer fluid and to heat water to be used in the chamber by means of said first heat exchanger, and to heat said heat transfer fluid and to cool the liquid contained in the tank by means of the second heat exchanger,
characterized by supplying heat to the contents of liquid tank during operation of the heat pump wherein said step of supplying heat is carried out by circulating the liquid between the tank and an additional, fluid to air heat exchanger and blowing air onto the additional heat exchanger via a controllable fan during operation of the heat pump.

Advantageously, the method comprises the step of controlling the flow rate of the circulated liquid and/or the flow rate of the blown air according to one or more of the following criteria:
a) blowing air and/or circulating the liquid during the entire operation time of the heat pump,
b) blowing air and/or circulating the liquid from a certain time after the compressor is switched on,
c) blowing air and/or circulating the liquid until a certain time after the compressor is switched off,
d) blowing air and/or circulating the liquid for a predetermined time as measured by a timer,
e) blowing air and/or circulating the liquid based on the temperature of the liquid in the tank, and
f) blowing air and/or circulating the liquid based on the quantity of frozen liquid in the tank.

Advantageously, the method further comprises a step of regenerating the liquid contained in the tank.

Advantageously, regenerating the liquid contained in the tank comprises draining away at least part of the cooled liquid. Draining away at least part of the cooled liquid from the tank can be performed when tap water is supplied to the tank from water mains. According to another embodiment, draining away at least part of the cooled liquid from the tank can be performed when the liquid level in the tank reaches a predetermined value.

Suitably, operating the heat pump is performed by switching the compressor on.

Suitably, the heat pump (that is, the compressor) is switched off at the end of an operation cycle of the heat pump.

Suitably, the heat pump (that is, the compressor) is operated (that is, switched-on) again for performing another operation cycle of the heat pump.

Advantageously, the heat pump is operated till a desired temperature is reached for the water to be used in the chamber. Thereafter, the heat pump (that is, the compressor) is switched off.

According to an embodiment, the heat pump is operated till the liquid in the tank reaches a predetermined condition (for example a predetermined degree of ice formation in the tank). Thereafter, the heat pump (that is, the compressor) is switched off. In this connection it is observed that ice formation in the tank can be reduced and heat pump operation times can be increased by performing liquid regeneration while the heat pump is switched on.

According to an embodiment, the heat pump is operated for a predetermined operation time. Thereafter, the heat pump (that is, the compressor) is switched off.

Advantageously, the heat pump is operated till a first one of at least two of the above conditions (desired temperature reached for the water to be used in the chamber, predetermined condition reached for the liquid in the tank, and end of predetermined operation time) is met.

In a preferred embodiment, regeneration of the liquid is performed while operating the heat pump, that is while the compressor is switched-on.

Regeneration of the liquid during operation of the heat pump can be carried out once or more times during a same operation cycle of the heat pump.

In addition or in alternative, regeneration of the liquid can be performed while the heat pump is switched off, that is while the compressor is switched-off, for example during laundry rinsing, laundry spinning or laundry washing (in the latter case, after the desired temperature is reached for the water to be used in the chamber).

Features and advantages of the present invention will be more readily understood from the following detailed description of some preferred embodiments thereof, which is provided below by way of non-limiting example with reference to the accompanying drawings, wherein:
- figure 1 generically represents a washing machine according to the invention;
- figure 2 schematically shows a detail of an embodiment of the washing machine of the present invention.

Like elements are denoted by like reference signs throughout the figures.

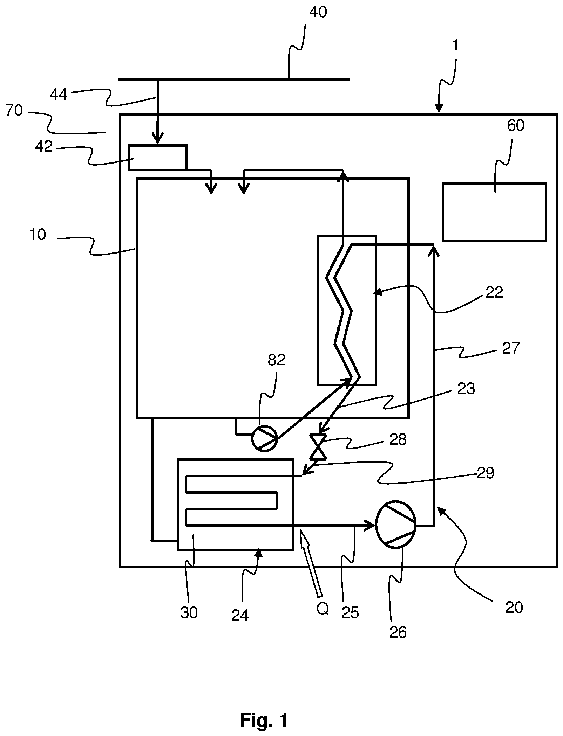

Figure 1 shows a heat pump washing machine 1, comprising a chamber 10 for treating goods, a tank 30 adapted to contain a liquid, and a heat pump 20 adapted to absorb heat from the liquid contained in the tank 30 and to heat water to be used in the chamber 10, also referred to as process water hereinafter.

The washing machine also comprises a water outlet circuit (not shown) for discharging waste water (i.e. used water optionally mixed with washing products) from the chamber 10 after process cycles (e.g., washing, rinsing cycles).

The water outlet circuit can comprise a draining pump and draining pipes.

The water outlet circuit is advantageously fluidly connected to the bottom of the chamber 10.

The tank 30 can be thermally coupled to the water outlet circuit in order to transfer heat from waste water flowing through the pipes into the liquid contained in the tank 30 for regeneration thereof. For example, thermal coupling can be achieved by placing the draining pipes in contact with the tank 30.

The washing machine 1 advantageously further comprises a water inlet circuit 70 (only diagrammatically shown) adapted to supply water, that can be optionally mixed with washing products, into the chamber 10. The water inlet circuit 70 advantageously comprises a drawer 42 and water inlet pipes 44.

The water inlet pipes 44 fluidly connect water mains 40 to the chamber 10 via the drawer 42.

The drawer 42 is adapted to be filled with products, for example detersives, softener, bleaching, sparkling/rinse aid substances, etc. The drawer 42 can comprise one or more compartments (not shown) for one or more products from which a certain amount of these products, depending on the washing program, is delivered into the chamber 10.

The tank 30 can be a closed tank 30 whose content is not changed within the framework of the normal process carried out by the washing machine.

In one alternative, the tank 30 can have an input which is directly fluidly connected to public water mains 40 in order to be able to directly receive tap water from it bypassing the chamber 10 (that is without making the tap water to pass through the chamber 10).

In another alternative, the tank 30 can have an input which is in fluid connection with waste water from the chamber 10.

In still another alternative, the tank 30 can have an input that may be selectively, such as through an electrovalve, put in fluid connection with water mains 40 and with waste water from the chamber 10.

In the alternatives above, the tank 30 has an output fluidly connected to the water outlet circuit in order to drain away cooled/iced liquid from the tank 30 via the water outlet circuit. The output and the water outlet circuit are suitably connected through pipes.

The liquid contained in the tank 30 advantageously is tap water and/or waste process water, possibly mixed with the above mentioned products.

When the tank is a closed tank 30, the liquid contained in the tank 30 can differ from water and be, for example, glycol, which has the advantage of a low freezing point.

Alternatively, the liquid contained in the tank 30 can comprise a carrier liquid and a frost protection agent that reduces the freezing point of the mixture compared with the freezing point of the pure carrier liquid. In this way, cooling to lower temperatures can be accomplished while heat is delivered to heat pump 20, either to just above or to or below the freezing point.

As another alternative, the liquid contained in the tank 30 can comprise a carrier liquid and a freezing-point-increasing agent, that increases the freezing point of the mixture compared with the pure carrier liquid and thus works in more convenient thermodynamics conditions.

The tank 30 is advantageously positioned on a bottom region of the washing machine 1.

The amount of liquid contained in the tank 30 and the volume of the tank 30 depend on the amount of water that must be heated up during a process cycle of the washing machine 1, the temperature required for the water, and the percentage of frozen liquid in the tank 30.

As explained in more detail below, according to the invention, the heat pump efficiency is improved and ice formation in the tank 30 is reduced so that the size of the tank 30 can be reduced compared with prior art washing machines.

As shown in figure 1, the heat pump 20 suitably comprises a heat exchanger used as a condenser 22, a heat exchanger used as an evaporator 24, a compressor 26 and a pressure lowering device or lamination means 28, such as an expansion valve that may be a thermostatic or electronic valve, or a capillary tube.

The condenser 22, the evaporator 24, the compressor 26 and the pressure lowering device 28 form as a whole a closed circuit or conduit filled with a heat transfer fluid, such as a refrigerant. During operation of the heat pump 20 (that is, when the compressor 26 is switched-on), heat is generated at the condenser 22, i.e. released to the process water, and cold is generated at the evaporator 24, i.e. heat is subtracted from the liquid within tank 30.

The heat transfer fluid is pumped from the compressor 26, usually trough a connecting pipe 27, to the condenser 22, where liquefaction takes place accompanied by release of heat. The released heat is used to warm water to be used in the chamber 10. From the condenser 22 the heat transfer fluid passes, usually trough a connecting pipe 23 and via the pressure lowering device 28, and usually trough a connecting pipe 29, to the evaporator 24 where the heat transfer fluid evaporates whilst absorbing heat from the liquid contained in the tank 30. From the evaporator 24 the heat transfer fluid runs back, usually trough a connecting pipe 25, to the compressor 26.

The evaporator 24 can comprise a pipe or a series of pipes properly shaped and immersed in the liquid contained in the tank 30.

The heat transfer fluid of the heat pump 20 is properly selected so as to have an evaporation temperature below the solidification point of the liquid within tank 30. In the case of water being contained in tank 30, having an icing point of 0°C, the evaporation temperature of the heat transfer fluid should be lower than 0°C, as better detailed hereinafter.

Thus, within evaporator 24, the heat transfer fluid recovers thermal energy from the tank 30 cooling down and icing the water or other liquid contained thereinto. The thermal energy is transferred to the washing water via condenser 22.

Considering that during operation of the heat pump 20, ice (if any) is inclined to build up around the evaporator 24, if the tank 30 is not a closed tank then its input and output are preferably positioned sufficiently far apart from the evaporator 24 so as to prevent any obstruction of the input and output due to ice formation.

The condenser 22 can be located within the chamber 10, preferably on a bottom region, or outside the chamber 10.

The condenser 22 is advantageously arranged so as to be able to heat the water to be used in the chamber 10.

The condenser 22 can be a tube-in-tube heat exchanger, a plate heat exchanger or similar fluid to fluid heat exchanger. The water to be used in the chamber 10 is made to flow through the condenser 22 so that it exhanges energy with the heat transfer fluid or refrigerant by forced convection.

The water can be continuously recirculated by a pump 82 through the condenser 22 and back to the chamber 10 until the desired temperature is reached. Water is preferably drained from the chamber 10 from the bottom and returned back into the chamber 10 at another location, preferably at an upper location via the condenser 22.

The condenser 22 may be positioned inside the chamber 10.

Alternatively, tap water can be heated directly, by flowing through the condenser 22, before entering into the chamber 10. In this case, pump 82 and pipes (not shown) are adapted to directly drain tap water from the water mains 40 bypassing the chamber 10, to conduct the tap water through the condenser 22 and then into the chamber 10, without recirculation. In this embodiment, the condenser 22 operates without being in contact with waste water.

The washing machine suitably comprises a control unit 60 configured to control operation of the washing machine 1.

When the washing machine 1 is turned on in order to perform a predetermined washing program, the control unit 60 is advantageously configured to switch the heat pump 20 on any time water has to be heated for use in the chamber 10 in order to perform a process cycle (e.g., washing, rinsing, and similar) of the predetermined washing program.

The control unit 60 is also advantageously configured to switch the heat pump 20 off when the process water reaches a desired process temperature or when the liquid in the tank reaches a predetermined condition (for example, when it is in large part iced).

The liquid in the tank 30 exchanges sensible heat during a cooling phase of the liquid and latent heat during an icing phase (if any). The exploitation of the latent heat allows reducing the amount of liquid required and therefore the overall dimensions of the tank 30. Accordingly, the control unit 60 is advantageously configured to operate the heat pump 20 so that the liquid in the tank 30 is at least partially freezed.

Depending on the program design, heat pump power, and wash temperature, the heat pump 20 alone might be insufficient to heat up the water to the desired process temperature in the available time. Therefore, a conventional electrical heater (not shown) may be comprised in the washing machine 1 as well. The conventional electrical heater can be suitably positioned on the bottom of the chamber 10.

In a heat pump washing machine 1 as disclosed thus far, in order to guarantee that the desired process temperature is reached for the desired amount of process water, the heat exchanger 22 and the flow rate of the process water thereinto should be suitably sized. The heat transfer fluid flowing within heat pump 20 should be capable of releasing the proper amount of heat at the heat exchanger 22.

The heat transfer fluid flowing within heat pump 20 should therefore be capable of receiving a proper amount of heat in the remainder of the heat pump circuit. Complete evaporation of the heat transfer fluid should also be ensured in order to safeguard the compressor 26 from damages that would possibly be caused if liquid particles of heat transfer fluid entered thereinto.

According to the present invention, these aims are attained by supplying heat Q upstream of the compressor 26, more specifically between the outlet of the pressure lowering device 28 and the inlet of the compressor 26, thus at the evaporator 24 or at the portion of the heat transfer fluid circuit connecting its outlet to the compressor 26.

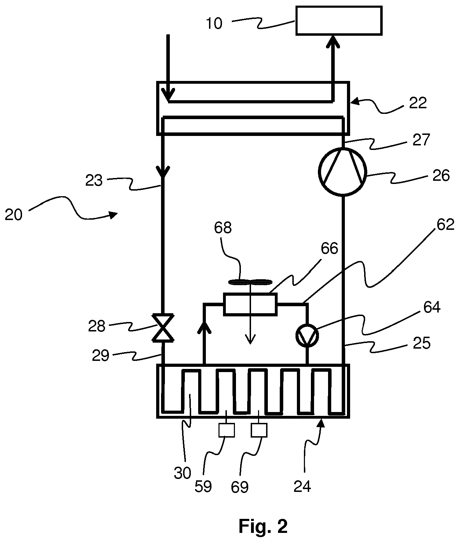

As disclosed in more detail hereinafter, the heat Q is supplied by an additional heat exchanger (heat exchanger 66 in FIG. 2) configured to increase the average temperature of the liquid and/or to reduce the percentage of solified liquid -ice- within tank 30, in a controlled manner and/or during operation of the heat pump 20.

As said, in order to safeguard the compressor 26, complete evaporation of the heat transfer fluid upstream thereof should be ensured. To this aim, the heat transfer fluid would conventionally be so selected as to have an evaporation temperature well below the solidification temperature of the liquid within tank 30, such as 5°C to 10°C below the solidification temperature of the liquid within tank 30, and/or the length of the path within evaporator 24 would conventionally be so selected that the heat transfer fluid is totally evaporated and superheated within evaporator 24. In case water is contained within tank 30, having an icing temperature of 0°C, the heat transfer fluid would conventionally be selected as one having an evaporation temperature between -5°C and -10°C.

A lower evaporation temperature and thus a lower temperature of the heat transfer fluid at the outlet of the evaporator 24 decreases however the heat pump efficiency and the heat amount that can be transferred from the tank 30 to the process water. In fact, the lower the evaporation temperature, the lower is the evaporation pressure and thus the lower are the density of the heat transfer fluid and, the compressor being equal, the heat transfer fluid mass flow rate, so that the lower are the heating and cooling powers of the heat pump 20.

A longer path within evaporator 24 disadvantageously requires more of the limited space that is available within the washing machine 1.

In an embodiment of the present invention, as diagrammatically shown in FIG. 2, a liquid circulation conduit 62 is associated to the tank 30. According to the invention in such conduit an additional heat exchanger 66 is provided to increase the average temperature of the contents of the tank 30 in a controlled manner and/or during operation of the heat pump 20.

The liquid circulation conduit 62 is preferably provided with a pump 64 as shown. This allows i.a. to increase the heat transfer coefficient of the second heat exchanger 24 and/or of the additional heat exchanger 66.

Additional heat exchanger 66 is a fluid to air heat exchanger 66 to provide heat to the circulating liquid from ambient air, or from the air within the cabinet of the washing machine 1.

Thus, the average temperature of the liquid within tank 30 is increased, and/or the storing capacity of the tank 30 is increased and/or the percentage of solidified liquid - ice in the case of water - is reduced, thus increasing the performance of the heat pump 20 because the latent heat during icing can be exploited without however allowing too much ice to accumulate on the evaporator 24.

The heating transfer can also continue after the end of the heat pump operation to speed up the regeneration of the cooled/iced liquid within tank 30, that is to warm it up/melt it towards the starting temperature, in order to be used again as energy source for the heat pump 20 in a next, optionally immediately subsequent, washing cycle.

A controllable fan 68 is moreover associated with additional heat exchanger 66.

The fan 68 and/or the pump 64 can be switched on and controlled, by control unit 60, according to one or more of the following criteria:
a) operating the controllable fan 68 and/or the pump 64 for the entire operation time when compressor 26 is working and thus the heat pump 20 is working,
b) switching the controllable fan 68 and/or the pump 64 on a certain time after the compressor 26 is switched on,
c) switching the controllable fan 68 and/or the pump 64 off a certain time after the compressor 26 is switched off,
d) operating the controllable fan 68 and/or the pump 64 for a predetermined time as measured by a timer,
e) operating the controllable fan 68 and/or the pump 64 based on the temperature Td of the liquid in the tank 30, as estimated or averaged or measured runtime through a temperature sensor 59 diagrammatically shown in FIG. 2,
f) operating the controllable fan 68 and/or the pump 64 based on the quantity of frozen liquid in the tank 30, as estimated or averaged or measured runtime through a sensor 69 adapted to detect a degree of icing diagrammatically shown in FIG. 2. For example, such a sensor 69, may be a thermometer arranged in close proximity to the second heat exchanger 24, particulalry close to the heat exchanging fins of the second heat exchanger 24 where the liquid in the tanks 30 start solidifying (icing in case of water).

The embodiment of FIG. 2 is advantageously configured to carry out a method of operating a washing machine according to the invention. When the washing machine 1 comprises a chamber 10 for receiving goods to be washed, a liquid tank 30, and a heat pump 20 comprising a first heat exchanger 22, a second heat exchanger 24, a compressor 26 and a pressure lowering device 28 forming a circuit comprising a heat transfer fluid, the method according to the invention comprises operating the heat pump 20 so as to cool said heat transfer fluid and to heat water to be used in the chamber 10 by means of said first heat exchanger 22, and to heat said heat transfer fluid and to cool the liquid contained in the tank 30 by means of the second heat exchanger 24; and supplying heat to the contents of the liquid tank 30 during operation of the heat pump 20.

The step of supplying heat is carried out by circulating the liquid between the tank 30 and an additional, fluid to air heat exchanger 66 and blowing 68 air onto the additional heat exchanger 66 during operation of the heat pump 20.

The step of circulating is preferably carried out through pumping, such as through pump 64, the liquid.

The method advantageously comprises the step of controlling the flow rate of the blown air and/or the flow rate of the circulated liquid according to one or more of the following criteria:
a) blowing air and/or circulating the liquid during the entire operation time of the heat pump 20,
b) blowing air and/or circulating the liquid from a certain time after the compressor 26 is switched on,
c) blowing air and/or circulating the liquid until a certain time after the compressor 26 is switched off,
d) blowing air and/or circulating the liquid for a predetermined time as measured by a timer,
e) blowing air and/or circulating the liquid based on the temperature of the liquid in the tank, and
f) blowing air and/or circulating the liquid based on the quantity of frozen liquid in the tank.

The control unit 60 is advantageously configured to also manage the other components of the washing machine 1.

In particular, the control unit 60 may be configured to control start/stop of tap water entry from the water mains 40 and start/stop of water exit to the water outlet circuit in order to be used as process water and/or to perform liquid regeneration within tank 30 for further usage as thermal energy source, namely with the purpose of melting any ice formation in the tank 30 and replacing at least part of the cooled liquid with tap water at a higher temperature. Indeed, temperature of "cold" tap water can range from about 15°C to 20°C, depending on the washing machine location (e.g. indoor or outdoor) and on the external ambient temperature. In addition, temperature of hot tap water can range from about 30°C to 50°C.

Starting/stopping tap water entry into the washing machine 1 can be performed by the control unit 60 by opening/closing at least one suitable valve (not shown).

Starting/stopping water exit from the washing machine 1 can be performed by the control unit 60 by opening/closing at least one suitable valve (not shown) and switching on/off a draining pump where provided for.

In the previous description, a number of controls on a number of components of the washing machine have been mentioned. It will be understood that all those controls will be preferably performed by a single control unit, but also two or more control units can be provided. A driver of an electrovalve 28 is to be considered part of such control unit 60.

The washing machine 1 can be a washing machine or a washing-drying machine.

The washing machine 1 can be a dish washer or a laundry washer.

In the case of laundry washer the chamber 10 can be a drum, optionally perforated, which is rotatably contained in a tub (not shown).

Those skilled in the art will understand that several changes, omissions, additions of components may be made to the embodiments disclosed hereinabove without departing from the scope of protection of the present invention as defined by the following claims.

## Claims

1. A washing machine (1) comprising:
- a chamber (10) for receiving goods to be washed,
- a tank (30) adapted to contain a liquid,
- a heat pump (20) comprising a first heat exchanger (22), a second heat exchanger (24), a compressor (26) and a pressure lowering device (28) forming a circuit comprising a heat transfer fluid, the first heat exchanger (22) being adapted to cool said heat transfer fluid and to heat water to be used in the chamber (10), the second heat exchanger (24) being adapted to heat said heat transfer fluid and to cool the liquid contained in the tank (30), a liquid circulation conduit (62) being associated to the tank (30),
**characterized in that,** to supply heat to the tank (30) during operation of the heat pump (20), washing machine (1) further comprises an additional, fluid to air heat exchanger (66) connected into such liquid circulation conduit (62) such that liquid is circulated between the tank (30) and said additional, fluid to air heat exchanger (66), a controllable fan (68) associated with said additional heat exchanger (66) and a control unit (60) configured to control the controllable fan (68) during operation of the heat pump (20).

2. The washing machine (1) of claim 1, wherein the liquid circulation conduit (62) is provided with a pump (64), and wherein the pump (64) and/or the controllable fan (68) are operated during operation of the heat pump (20).

3. The washing machine (1) according to claim 1 or 2, wherein said control unit (60) is configured to control the controllable fan (68) and/or the pump (64) where provided for according to one or more of the following criteria:
a) operating the controllable fan (68) and/or the pump (64) during the entire operation time of the heat pump (20),
b) switching the controllable fan (68) and/or the pump (64) on a certain time after the compressor (26) is switched on,
c) switching the controllable fan (68) and/or the pump (64) off a certain time after the compressor (26) is switched off,
d) operating the controllable fan (68) and/or the pump (64) for a predetermined time as measured by a timer,
e) operating the controllable fan (68) and/or the pump (64) based on the temperature of the liquid in the tank (30),
f) operating the controllable fan (68) and/or the pump (64) based on the quantity of frozen liquid in the tank (30).

4. The washing machine according to any of claims 1-3, wherein the tank (30) is an open tank directly fluidly connected to the water mains (40), that is by means of a conduit that bypasses the chamber (10).

5. A method of operating a washing machine (1) comprising a chamber (10) for receiving goods to be washed, a liquid tank (30), and a heat pump (20) comprising a first heat exchanger (22), a second heat exchanger (24), a compressor (26) and a pressure lowering device (28) forming a circuit comprising a heat transfer fluid, the method comprising:
- operating the heat pump (20) so as to cool said heat transfer fluid and to heat water to be used in the chamber (10) by means of said first heat exchanger (22), and to heat said heat transfer fluid and to cool the liquid contained in the tank (30) by means of the second heat exchanger (24),
**characterized by** supplying heat to the liquid tank (30) during operation of the heat pump (20), wherein said step of supplying heat is carried out by circulating the liquid between the tank (30) and an additional fluid to air heat exchanger (66) and blowing air onto the additional heat exchanger (66) via a controllable fan (68) during operation of the heat pump (20).

6. The method of claim 5, wherein the method comprises the step of controlling the flow rate of the blown air and/or the flow rate of the circulated liquid according to one or more of the following criteria:
a) blowing air and/or circulating the liquid during the entire operation time of the heat pump (20),
b) blowing air and/or circulating the liquid from a certain time after the compressor (26) is switched on,
c) blowing air and/or circulating the liquid until a certain time after the compressor (26) is switched off,
d) blowing air and/or circulating the liquid for a predetermined time as measured by a timer,
e) blowing air and/or circulating the liquid based on the temperature of the liquid in the tank (30), and
f) blowing air and/or circulating the liquid based on the quantity of frozen liquid in the tank (30).

## Patentansprüche

1. Waschmaschine (1), die Folgendes umfasst:
- eine Kammer (10) zum Aufnehmen von Waschgut,
- einen Behälter (30), der dafür ausgelegt ist, eine Flüssigkeit zu enthalten,
- eine Wärmepumpe (20), die einen ersten Wärmetauscher (22), einen zweiten Wärmetauscher (24), einen Kompressor (26) und eine Druckabsenkvorrichtung (28) umfasst, die einen Kreis bilden, der ein Wärmeübertragungsfluid umfasst, wobei der erste Wärmetauscher (22) dafür ausgelegt ist, das Wärmeübertragungsfluid abzukühlen und in der Kammer (10) zu verwendendes Wasser zu erwärmen, wobei der zweite Wärmetauscher (24) dafür ausgelegt ist, das Wärmeübertragungsfluid zu erwärmen und die in dem Behälter (30) enthaltene Flüssigkeit abzukühlen, wobei dem Behälter (30) eine Flüssigkeitsumwälzleitung (62) zugeordnet ist,
**dadurch gekennzeichnet, dass** zum Zuführen von Wärme zu dem Behälter (30) während des Betriebs der Wärmepumpe (20) die Waschmaschine (1) ferner einen zusätzlichen Fluid-zu-Luft-Wärmetauscher (66), der so mit der Flüssigkeitsumwälzleitung (62) verbunden ist, dass Flüssigkeit zwischen dem Behälter (30) und dem zusätzlichen Fluid-zu-Luft-Wärmetauscher (66) umgewälzt wird, ein steuerbares Gebläse (68), das dem zusätzlichen Wärmetauscher (66) zugeordnet ist, und eine Steuereinheit (60), die konfiguriert ist, das steuerbare Gebläse (68) während des Betriebs der Wärmepumpe (20) zu steuern, umfasst.

2. Waschmaschine (1) nach Anspruch 1, wobei die Flüssigkeitsumwälzleitung (62) mit einer Pumpe (64) versehen ist und wobei die Pumpe (64) und/oder das steuerbare Gebläse (68) während des Betriebs der Wärmepumpe (20) betrieben werden.

3. Waschmaschine (1) nach Anspruch 1 oder 2, wobei die Steuereinheit (60) konfiguriert ist, das steuerbare Gebläse (68) und/oder die Pumpe (64) zu steuern, soweit dies nach einem oder mehreren der folgenden Kriterien vorgesehen ist:
a) Betreiben des steuerbaren Gebläses (68) und/oder der Pumpe (64) während der gesamten Betriebszeit der Wärmepumpe (20),
b) Einschalten des steuerbaren Gebläses (68) und/oder der Pumpe (64) nach einer bestimmten Zeit, zu der der Kompressor (26) eingeschaltet worden ist,
c) Ausschalten des steuerbaren Gebläses (68) und/oder der Pumpe (64) nach einer bestimmten Zeit, zu der der Kompressor (26) ausgeschaltet worden ist,
d) Betreiben des steuerbaren Gebläses (68) und/oder der Pumpe (64) für eine festgelegte Zeit, die durch einen Zeitmesser gemessen wird,
e) Betreiben des steuerbaren Gebläses (68) und/oder der Pumpe (64) auf der Basis der Temperatur der Flüssigkeit in dem Behälter (30),
f) Betreiben des steuerbaren Gebläses (68) und/oder der Pumpe (64) auf der Basis der Menge an gefrorener Flüssigkeit in dem Behälter (30).

4. Waschmaschine nach einem der Ansprüche 1-3, wobei der Behälter (30) ein offener Behälter ist, der fluidtechnisch direkt, d. h. mittels einer Leitung, die die Kammer (10) umgeht, mit dem Wassernetz (40) verbunden ist.

5. Verfahren zu Betreiben einer Waschmaschine (1), die eine Kammer (10) zum Aufnehmen von Waschgut, einen Flüssigkeitsbehälter (30) und eine Wärmepumpe (20), die einen ersten Wärmetauscher (22), einen zweiten Wärmetauscher (24), einen Kompressor (26) und eine Druckabsenkvorrichtung (28) umfasst, die einen Kreis bilden, der ein Wärmeübertragungsfluid umfasst, umfasst, wobei das Verfahren die folgenden Schritte umfasst:
- Betreiben der Wärmepumpe (20), um das Wärmeübertragungsfluid abzukühlen und das in der Kammer (10) zu verwendende Wasser mittels des ersten Wärmetauschers (22) zu erwärmen und um das Wärmeübertragungsfluid zu erwärmen und die in dem Behälter (30) enthaltene Flüssigkeit mittels des zweiten Wärmetauschers (24) abzukühlen,
**gekennzeichnet durch** das Zuführen von Wärme zu dem Flüssigkeitsbehälter (30) während des Betriebs der Wärmepumpe (20), wobei der Schritt zum Zuführen von Wärme durch Umwälzen der Flüssigkeit zwischen dem Behälter (30) und einem zusätzlichen Fluid-zu-Luft-Wärmetauscher (66) und durch Blasen von Luft auf den zusätzlichen Wärmetauscher (66) mittels eines steuerbaren Gebläses (68) während des Betriebs der Wärmepumpe (20) ausgeführt wird.

6. Verfahren nach Anspruch 5, wobei das Verfahren den Schritt zum Steuern der Durchflussmenge der geblasenen Luft und/oder der Durchflussmenge der umgewälzten Flüssigkeit gemäß einem oder mehreren der folgenden Kriterien umfasst:
a) Blasen von Luft und/oder Umwälzen der Flüssigkeit während der gesamten Betriebszeit der Wärmepumpe (20),
b) Blasen von Luft und/oder Umwälzen der Flüssigkeit ab einer bestimmten Zeit, zu der der Kompressor (26) eingeschaltet worden ist,
c) Blasen von Luft und/oder Umwälzen der Flüssigkeit bis zu einem bestimmten Zeitpunkt, zu dem der Kompressor (26) ausgeschaltet worden ist,
d) Blasen von Luft und/oder Umwälzen der Flüssigkeit für eine festgelegte Zeit, die durch einen Zeitmesser gemessen wird,
e) Blasen von Luft und/oder Umwälzen der Flüssigkeit auf der Basis der Temperatur der Flüssigkeit in dem Behälter (30), und
f) Blasen von Luft und/oder Umwälzen der Flüssigkeit auf der Basis der Menge an gefrorener Flüssigkeit in dem Behälter (30).

## Revendications

1. Machine à laver (1) comprenant :
- une chambre (10) pour recevoir des articles à laver,
- un réservoir (30) adapté de façon à contenir un liquide,
- une pompe à chaleur (20) comprenant un premier échangeur de chaleur (22), un deuxième échangeur de chaleur (24), un compresseur (26) et un dispositif abaisseur de pression (28) formant un circuit comprenant un fluide de transfert de chaleur, le premier échangeur de chaleur (22) étant adapté de façon à refroidir ledit fluide de transfert de chaleur et à chauffer l'eau à utiliser dans la chambre (10), le deuxième échangeur de chaleur (24) étant adapté de façon à chauffer ledit fluide de transfert de chaleur et à refroidir le liquide contenu dans le réservoir (30), un conduit de circulation de liquide (62) étant associé au réservoir (30),
**caractérisée en ce que,** pour alimenter de la chaleur au réservoir (30) pendant le fonctionnement de la pompe à chaleur (20), ladite machine à laver (1) comprend en outre un échangeur de chaleur fluide à air supplémentaire (66) raccordé dans ledit conduit de circulation de liquide (62) de manière à ce que le liquide soit circulé entre le réservoir (30) et ledit échangeur de chaleur fluide à air supplémentaire (66), un ventilateur pouvant être commandé (68) associé audit échangeur de chaleur fluide à air supplémentaire (66) et une unité de commande (60) configurée de façon à commander le ventilateur pouvant être commandé (68) pendant le fonctionnement de la pompe à chaleur (20).

2. Machine à laver (1) selon la revendication 1, dans laquelle le conduit de circulation de liquide (62) est pourvu d'une pompe (64), cette pompe (64) et le ventilateur pouvant être commandé (68) étant actionnés pendant le fonctionnement de la pompe à chaleur (20).

3. Machine à laver (1) selon la revendication 1 ou 2, dans laquelle ladite unité de commande (60) est configurée de façon à commander le ventilateur pouvant être commandé (68) et/ou la pompe (64) le cas échéant conformément à un ou plusieurs des critères suivants :
a) le fonctionnement du ventilateur pouvant être commandé (68) et/ou de la pompe (64) pendant la durée totale de fonctionnement de la pompe à chaleur (20),
b) la mise en marche du ventilateur pouvant être commandé (68) et/ou de la pompe (64) un certain temps après que le compresseur (26) a été mis en marche,
c) l'arrêt du ventilateur pouvant être commandé (68) et/ou de la pompe (64) un certain temps après que le compresseur (26) a été arrêté,
d) le fonctionnement du ventilateur pouvant être commandé (68) et/ou de la pompe (64) pendant une durée prédéterminée telle que mesurée par une minuterie,
e) le fonctionnement du ventilateur pouvant être commandé (68) et/ou de la pompe (64) basé sur la température du liquide dans le réservoir (30),
f) le fonctionnement du ventilateur pouvant être commandé (68) et/ou de la pompe (64) basé sur la quantité de liquide congelé dans le réservoir (30).

4. Machine à laver selon l'une quelconque des revendications 1 à 3, dans laquelle le réservoir (30) est un réservoir ouvert raccordé directement de manière fluidique à la conduite principale d'eau (40), c'est-à-dire au moyen d'un conduit qui contourne la chambre (10).

5. Procédé de fonctionnement d'une machine à laver (1) comprenant une chambre (10) pour recevoir des articles à laver, un réservoir de liquide (30) et une pompe à chaleur (20) comprenant un premier échangeur de chaleur (22), un deuxième échangeur de chaleur (24), un compresseur (26) et un dispositif abaisseur de pression (28) formant un circuit comprenant un fluide de transfert de chaleur, ce procédé comprenant :
- le fonctionnement de la pompe à chaleur (20) de façon à refroidir le fluide de transfert de chaleur et à chauffer l'eau à utiliser dans la chambre (10) au moyen dudit premier échangeur de chaleur (22), et de façon à chauffer ledit fluide de transfert de chaleur et à refroidir le liquide contenu dans le réservoir (30) au moyen du deuxième échangeur de chaleur (24),
**caractérisé par** l'alimentation de chaleur au réservoir de liquide (30) pendant le fonctionnement de la pompe à chaleur (20), ladite étape d'alimentation de chaleur étant exécutée en faisant circuler le liquide entre le réservoir (30) et un échangeur de chaleur fluide à air supplémentaire (66) et en soufflant de l'air sur l'échangeur de chaleur supplémentaire (66) au moyen d'un ventilateur pouvant être commandé (68) pendant le fonctionnement de la pompe à chaleur (20).

6. Procédé selon la revendication 5, ce procédé comprenant l'étape de commande du débit de l'air soufflé et/du débit du liquide circulé conformément à un ou plusieurs des critères suivants :
a) le soufflage d'air et/ou la circulation du liquide pendant la durée totale de fonctionnement de la pompe à chaleur (20),
b) le soufflage d'air et/ou la circulation du liquide à partir d'un certain temps après que le compresseur (26) a été mis en marche,
c) le soufflage d'air et/ou la circulation du liquide un certain temps après que le compresseur (26) a été arrêté,
d) le soufflage d'air et/ou la circulation du liquide pendant une durée prédéterminée telle que mesurée par une minuterie,
e) le soufflage d'air et/ou la circulation du liquide basés sur la température du liquide dans le réservoir (30), et
f) le soufflage d'air et/ou la circulation du liquide basés sur la quantité de liquide congelé dans le réservoir (30).
